# EUROPEAN PATENT APPLICATION

(11) **EP 4 541 486 A1**
(43) Date of publication of application: **23.04.2025**
(21) Application number: 22947874.8
(22) Date of filing: 20.06.2022
(51) Int. Cl.: B22F 1/10, B22F 1/00, B22F 9/00, B23K 35/22, B23K 35/363

(54) **METAL PARTICLE-CONTAINING COMPOSITION, PASTE FOR BONDING AND BONDED BODY**

(71) Applicant: artience Co., Ltd., Chuo-ku Tokyo 104-0031 (JP)
(72) Inventor: UESUGI, Takahiko, Tokyo 104-0031 (JP); TANAKA, Naohiro, Tokyo 104-0031 (JP)
(74) Representative: Pfenning, Meinig & Partner mbB
(86) International application number: PCT/JP2022/024595
(87) International publication number: WO 2023/248311

(57) **Abstract**

A composition containing metal particles and a bonding paste in which a bonding strength at a bonded site is high and a decrease in the bonding strength accompanying thermal cycles is suppressed are provided. Further, a bonding paste that, in addition to the above properties, is excellent in printability onto a bonded body part even when containing a high concentration of metal particles is provided. Furthermore, a bonding body that does not deteriorate due to thermal cycles is provided. A composition containing metal particles contains: a metal particle (A) with an average particle size of 100 nm to 500 nm; and a compound (B) with a carbon number of 20 to 80 having a functional group (b) in a quantity of 2 or more, the functional group (b) being any one selected from hydroxyl group, carboxyl group, and amino group. A bonding paste contains a dispersion medium (C) and the above composition containing metal particles. A bonding body is obtained by bonding a first bonded part and a second bonded part with the above bonding paste.

## Description

### Technical Field

The disclosure relates to a composition containing metal particles, a bonding paste, and a bonding body.

### Related Art

Conventionally, solder has been used as a bonding material for adhering metal members to each other, metal members to semiconductor elements, metal members to light-emitting diode (LED) elements, etc. In recent years, in the field of next-generation power electronics technology, there is been a demand for devices such as SiC capable of operating at high temperatures. As bonding materials for manufacturing such devices, materials alternative to the solder are required from the viewpoint of high-temperature driving reliability. For example, as shown in Patent Document 1 to Patent Document 3, bonding materials such as bonding pastes using metal particles with sinterability have been proposed.

Patent Document 1 discloses a bonding material including: a metal submicron particle with an average primary particle size of 0.5 to 3.0 µm; and a metal nanoparticle having an average primary particle size of 1 to 200 nm and coated with an organic compound with a carbon number of 6 to 8. However, there was a problem that a bonding strength at a bonded site was poor and the bonding strength decreased along with thermal cycles.

Patent Document 2 discloses a bonding material including: a silver nanoparticle having an average primary particle size of 1 to 200 nm and coated with an organic substance with a carbon number of 8 or less; and a flux component having at least two carboxyl groups. Further, Patent Document 3 discloses a bonding material containing: silver microparticles with average primary particle sizes of 17 nm, 85 nm, and 0.6 µm; and a cross-linking type interparticle distance maintaining agent that maintains a spacing between the silver microparticles.

However, even with these bonding materials, similar to the technique disclosed in Patent Document 1, there was a problem that the strength at the bonded site was poor and the bonding strength decreased along with thermal cycles. Furthermore, in the case of creating a bonding paste containing a high concentration of silver nanoparticles to achieve dense and strong bonding, there was also a drawback that the fluidity became significantly poor. As a result, in a process of printing the bonding paste onto a bonded body part, there were problems such as fading at printed portions or formation of uncoated parts.

### Related Art Documents

### Patent Documents

Patent Document 1: Japanese Patent Application Laid-Open No. 2011-080147
Patent Document 2: Japanese Patent Application Laid-Open No. 2011-240406
Patent Document 3: Japanese Patent Application Laid-Open No. 2018-109232

### SUMMARY OF INVENTION

The properties required for a bonding paste using metal particles include printability onto a bonded body part, a sufficient bonding strength, as well as minimized decrease in the bonding strength after reliability tests such as thermal cycles.

Thus, an objective to be addressed by the disclosure is to provide a composition containing metal particles and a bonding paste in which a bonding strength at a bonded site is high and a decrease in the bonding strength accompanying thermal cycles is suppressed. Further, the objective is to provide a bonding paste that, in addition to the above properties, is excellent in printability onto a bonded body part even when containing a high concentration of metal particles. Furthermore, the objective is to provide a bonding body that does not deteriorate due to thermal cycles.

As a result of intensive research to address the above objective, the inventors have created the disclosure. A composition containing metal particles according to an aspect of the disclosure contains: a metal particle (A) with an average particle size of 100 nm to 500 nm; and a compound (B) with a carbon number of 20 to 80 having a functional group (b) in a quantity of 2 or more, the functional group (b) being any one selected from hydroxyl group, carboxyl group, and amino group.

In the composition containing metal particles according to an aspect of the disclosure, the quantity of the functional group is 2 or 3.

In the composition containing metal particles according to an aspect of the disclosure, the compound (B) has a branched and/or cyclic structure.

In the composition containing metal particles according to an aspect of the disclosure, with the quantity of the functional group being taken as n, the compound (B) has an n-valent hydrocarbon group.

In the composition containing metal particles according to an aspect of the disclosure, a carbon number of the n-valent hydrocarbon group is 30 to 60.

In the composition containing metal particles according to an aspect of the disclosure, the compound (B) includes one or more selected from the group consisting of dimer acid, trimer acid, dimer diol, trimer triol, dimer diamine, and trimer triamine.

The composition containing metal particles according to an aspect of the disclosure contains 0.1 parts by mass to 3 parts by mass of the compound (B) with respect to 100 parts by mass of the metal particle (A).

The composition containing metal particles according to an aspect of the disclosure contains 0.3 parts by mass to 2.7 parts by mass of the compound (B) with respect to 100 parts by mass of the metal particle (A).

In the composition containing metal particles according to an aspect of the disclosure, the compound (B) contains a compound (Bx) with a carbon number of 20 to 80 having three carboxyl groups.

In the composition containing metal particles according to an aspect of the disclosure, the compound (Bx) is trimer acid.

In the composition containing metal particles according to an aspect of the disclosure, the compound (B) further contains a compound (By) with a carbon number of 20 to 80 having two carboxyl groups.

In the composition containing metal particles according to an aspect of the disclosure, the compound (By) is dimer acid.

The composition containing metal particles according to an aspect of the disclosure contains 0.05 parts by mass to 2.7 parts by mass of the compound (Bx) with respect to 100 parts by mass of the metal particle (A).

In the composition containing metal particles according to an aspect of the disclosure, the average particle size of the metal particle (A) is 150 nm to 450 nm.

A bonding paste according to an aspect of the disclosure contains a dispersion medium (C) and the above composition containing metal particles.

In the bonding paste according to an aspect of the disclosure, the dispersion medium (C) includes a dispersion medium having a boiling point of 200°C or higher.

In the bonding paste according to an aspect of the disclosure, the dispersion medium (C) includes a dispersion medium having a boiling point of 250°C or higher.

In the bonding paste according to an aspect of the disclosure, the dispersion medium (C) includes one or more selected from the group consisting of glycol ether-based dispersion media and diol-based dispersion media.

In the bonding paste according to an aspect of the disclosure, a proportion of a mass of the metal particle (A) in a mass of the bonding paste is 80 mass% to 95 mass%.

A bonding body according to an aspect of the disclosure is obtained by bonding a first bonded part and a second bonded part with the above bonding paste.

The disclosure is capable of providing a composition containing metal particles and a bonding paste in which a bonding strength at a bonded site is high and the bonding strength does not decrease along with thermal cycles. Further, in addition to these effects, the disclosure is capable of providing a bonding paste that is also excellent in printability. Furthermore, the disclosure is capable of providing a bonding body that does not deteriorate due to thermal cycles.

### DESCRIPTION OF EMBODIMENTS

In this specification, "a metal particle (A) with an average particle size of 100 nm to 500 nm" may be simply referred to as "a metal particle (A)", and "a compound (B) with a carbon number of 20 to 80 having a plurality of same functional groups in a molecule" may be simply referred to as "a compound (B)".

A composition containing metal particles of the disclosure contains a metal particle (A) and a compound (B). Further, a bonding paste contains a dispersion medium (C) in addition to the metal particle (A) and the compound (B). The composition containing metal particles may be formed by volatilizing, from the bonding paste, a part or all of the dispersion medium (C) during a process for bonding.

By combining the metal particle (A) and the compound (B), even in a state of a coating film, the composition containing metal particles of the disclosure can impart fluidity to the coating film due to a high non-volatility and a high viscosity of the compound (B). Accordingly, in a sintering stage of the metal particle (A) having a predetermined particle size, wettability to a substrate is improved, and adhesion is improved. Thus, formation of voids in the coating film is suppressed to form a dense coating film, and an excellent bonding strength and a bonding strength after thermal cycles can be exhibited.

### <Metal particle (A)>

Examples of the metal in the metal particle (A) include gold, silver, copper, nickel, chromium, palladium, rhodium, ruthenium, indium, silicon, aluminum, tungsten, molybdenum, platinum, and alloys thereof. Further, examples include a microparticle with a core covered by a material different from a material of the core, specifically, for example, a silver-coated copper powder with copper as the core, covered by silver on the surface. Further, examples also include powders of metal oxides such as silver oxide, indium oxide, tin oxide, zinc oxide, ruthenium oxide, tin-doped indium oxide (ITO), aluminum-doped zinc oxide (AZO), and gallium-doped zinc oxide (GZO), powders coated with these metal oxides on the surface, etc. The metal used may be of one type or a combination of two or more types.

In terms of obtaining a bonding body having a particularly excellent strength, the metal particle (A) is preferably selected from copper or silver. Furthermore, in terms of being capable of accommodating a wide range of sintering temperatures and being adaptable also to various sintering environments such as under atmospheric pressure, nitrogen atmosphere, vacuum, or reducing atmosphere, the metal particle (A) is more preferably silver.

By being in a specific range of average particle size, the metal particle (A) has a function of melting or binding (hereinafter also referred to as sintering) between particles in a temperature range of 200°C to 350°C, in which the composition containing metal particles or the bonding paste is heated and sintered, and it becomes possible to transform into bulk metal. As a result, bonded bodies are bonded. Hereinafter, a portion formed by the sintering of the metal particle (A) present between the bonded bodies will be referred to as a bonding layer.

In the disclosure, it is important to use a metal particle (A) having a specific average particle size. The "average particle size" referred to in this specification means a 50% particle size (d50) in a cumulative particle size distribution on a volume basis obtained according to a measurement method described in Examples. The d50 of the metal particle (A) is 100 to 500 nm, preferably 150 nm or more, more preferably 180 nm or more, and even more preferably 200 nm or more. Further, the d50 of the metal particle (A) is preferably 450 nm or less, more preferably 350 nm or less, and even more preferably 300 nm or less.

The metal particle (A) is preferably coated with an organic component (a) on the surface. When coated with the organic component (a), storage stability of the composition containing metal particles and the bonding paste can be expected to increase. Examples of the organic component (a) include fatty acids, aliphatic amines, aliphatic alcohols, etc., and the organic component (a) is preferably a saturated or unsaturated fatty acid, more preferably a saturated or unsaturated fatty acid with a carbon number of 3 to 18, and even more preferably a saturated or unsaturated fatty acid with a carbon number of 6 to 18. The organic component (a) may include one or two or more types.

The metal particle (A) may be used alone or in a combination of multiple types. Further, as necessary, a metal particle other than the metal particle (A) may also be used together. In the case of using a metal particle other than the metal particle (A) together, a metal particle of a particle size with an average particle size exceeding 500 nm may be combined, or a metal particle of a particle size with an average particle size exceeding 1000 nm may be combined.

### <Compound (B)>

Next, the compound (B) will be described. Generally, since the metal particle is a powder, in the case where the compound (B) is not included, it becomes difficult to form an interface with a bonded part as the dispersion medium (to be described later) volatilizes from the bonding paste. However, by including the compound (B) of the disclosure, even after a part or all of the dispersion medium (C) has volatilized, the composition containing metal particles can be present in a liquid form, so a good bonding interface integrated with the bonded part can be formed.

The compound (B) has a structure having, in a quantity of 2 or more, any one functional group (hereinafter, this functional group will be simply referred to as a "functional group (b)") selected from hydroxyl group, carboxyl group, or amino group in the molecule, and having a carbon number of 20 to 80.

The carbon number of the compound (B) represents a value that also includes carbon in the functional group (b). Thus, in the case where the functional group (b) in the compound (B) is a carboxyl group, the carbon number also including carbon in this carboxyl group is regarded as the carbon number of the compound (B).

In the compound (B), a skeleton (partial structure) excluding the functional group (b) is an organic residue, but is preferably a hydrocarbon group or a group obtained by bonding multiple hydrocarbon groups by a linking group including heteroatoms. Examples of such a linking group containing heteroatoms include -O-group (ether group), -C(=O)-group (carbonyl group), -C(=O)-O-group (ester group or oxycarbonyl group), and -C(=O)-NH-group (amide group or iminocarbonyl group). Preferably, the compound (B) does not have a functional group other than the functional group (b).

The state of matter of the compound (B) is not particularly limited, but is preferably liquid at 200°C to 350°C, which is a temperature range in which the composition containing metal particles of the disclosure is sintered. The compound (B) may be solid or liquid at room temperature (25°C), but from the viewpoint of being uniformly dispersed in the composition containing metal particles to act effectively, the compound (B) is more preferably liquid at room temperature.

In the case where the compound (B) has the property of being liquid in the above temperature range, it can be expected that wettability at the bonding interface with the bonded part increases, and a contact area increases. As a result, it becomes possible to manufacture a bonding body having a strong bonding interface. Further, it is thought that, even if voids are formed in the bonding layer during sintering, since the fluidity of the composition containing metal particles increases, the liquid compound (B) flows into defective parts such as voids, and it is possible to obtain a bonding layer and a bonding body with fewer defects.

The quantity of the functional group (b) in the compound (B) is preferably 2 or 3.

The compound (B) may have a linear structure or may have a branched and/or cyclic structure, but preferably has a branched and/or cyclic structure. In the case of having a branched and/or cyclic structure, it is preferable in terms of having a low crystallinity and readily becoming a liquid with a good fluidity.

In the case where the quantity of the functional group (b) of the compound (B) is taken as n, the compound (B) preferably has an n-valent hydrocarbon group. In the compound (B), in terms of obtaining a strong bonding body, the skeleton excluding the functional group (b) is more preferably composed only of the n-valent hydrocarbon group.

For the above reasons, preferably, the compound (B) does not immediately evaporate at the start of sintering. However, at the end of sintering, it does not necessarily need to remain in the formed bonding layer. In the case where the carbon number of the n-valent hydrocarbon group is 30 to 60, it is preferable since the amount of the compound (B) remaining in the bonding layer after sintering can be further reduced, and a denser bonding layer can be readily obtained. As a result, an initial bonding strength is excellent, and suppression of a decrease in the bonding strength accompanying thermal cycles can be further expected.

Examples of the compound (B) having a linear structure include, but are not limited to, eicosanedioic acid, heneicosanedioic acid, docosanedioic acid, tetracosanedioic acid, triacontanedioic acid, dotriacontanedioic acid, tetracontanedioic acid, pentacontanedioic acid, hexacontanedioic acid, and batyl alcohol.

Examples of the compound (B) having a branched and/or cyclic structure include, but are not limited to, dimer acid, trimer acid, tetramer acid, dimer diol, trimer triol, tetramer tetraol, dimer diamine, trimer triamine, tetramer tetramine, and phytantriol.

Specifically, for the reasons described above, the compound (B) is more preferably a compound selected from the group consisting of dimer acid, trimer acid, dimer diol, trimer triol, dimer diamine, and trimer triamine.

Dimer acid, trimer acid, and tetramer acid may be manufactured by polymerization reactions of unsaturated fatty acids. For example, they may be manufactured by a radical reaction or a Diels-Alder reaction between oleic acid (carbon number 18) and linoleic acid (carbon number 18). Preferably, the carbon number of dimer acid is 36 or 44, the carbon number of trimer acid is 54, and the carbon number of tetramer acid is 72. Further, it is possible to manufacture a compound (B) having a carbon number other than those described above by appropriately changing the carbon numbers of the unsaturated fatty acids serving as raw materials. In this specification, dimer, trimer, and tetramer of unsaturated fatty acids with a carbon number of 12 or more are referred to as dimer acid, trimer acid, and tetramer acid, respectively.

Dimer diol has a structure in which the carboxyl groups of dimer acid are reduced to hydroxyl groups; trimer triol has a structure in which the carboxyl groups of trimer acid are reduced to hydroxyl groups; and tetramer tetraol has a structure in which the carboxyl groups of tetramer acid are reduced to hydroxyl groups. Preferably, the carbon number of dimer diol is 36, the carbon number of trimer triol is 54, and the carbon number of tetramer tetraol is 72.

Dimer diamine has a structure in which the carboxyl groups of dimer acid are functionally converted to amino groups; trimer triamine has a structure in which the carboxyl groups of trimer acid are functionally converted to amino groups; and tetramer tetramine has a structure in which the carboxyl groups of tetramer acid are functionally converted to amino groups. Preferably, the carbon number of dimer diamine is 36, the carbon number of trimer triamine is 54, and the carbon number of tetramer tetramine is 72.

Due to the manufacturing process, the compound (B) may be a mixture of compounds with different degrees of polymerization, but the compound (B) may be used as a mixture of different polymers or may be used as one specific compound.

The composition containing metal particles of the disclosure preferably contains 0.1 parts by mass to 3 parts by mass, and more preferably 0.3 parts by mass to 2.7 parts by mass, of the compound (B), with respect to 100 parts by mass of the metal particle (A). In this range, it is possible to obtain a bonding body that is excellent particularly in an initial bonding strength and suppresses a decrease in the bonding strength accompanying thermal cycles.

### [Compound (Bx)]

As the compound (B), the composition containing metal particles of the disclosure preferably includes a compound (Bx) with a carbon number of 20 to 80 having three carboxyl groups. The compound (Bx) may have a linear structure or may have a branched and/or cyclic structure, but preferably has a branched and/or cyclic structure. In the case of having a branched and/or cyclic structure, it is preferable in terms of having a low crystallinity and readily becoming a liquid with a good fluidity. The compound (Bx) preferably has a trivalent hydrocarbon group. In the compound (Bx), in terms of obtaining a strong bonding body, a skeleton excluding the carboxyl groups is preferably composed only of the trivalent hydrocarbon group. A specific example of the compound (Bx) having a branched and/or cyclic structure is trimer acid, which is suitably used.

The composition containing metal particles of the disclosure preferably contains 0.05 parts by mass to 2.7 parts by mass of the compound (Bx) with respect to 100 parts by mass of the metal particle (A). In the above range, excellent bonding strength and thermal cycle properties can be exhibited even under more severe conditions, such as a case of using a bonded substrate that has not been subjected to plating treatment. A content of the compound (Bx) is preferably 0.15 parts by mass to 1.7 parts by mass. In this range, a bonding body that is excellent particularly in an initial bonding strength and thermal cycle properties can be obtained.

### [Compound (By)]

As the compound (B), the composition containing metal particles of the disclosure preferably further includes a compound (By) with a carbon number of 20 to 80 having two carboxyl groups. The compound (Bx) described above and the compound (By) having a different quantity of carboxyl groups have different volatilization or decomposition temperatures, with the compound (By) having a lower volatilization or decomposition temperature than the compound (Bx). Thus, using them in combination, simultaneous volatilization or decomposition at a specific temperature can be suppressed during the sintering process of silver. Thus, the coating film can be sintered while maintaining a high fluidity for a longer time. Accordingly, adhesion with the bonded part is further improved, and it becomes possible to obtain a strong bonding body with fewer defects.

The compound (By) may have a linear structure or may have a branched and/or cyclic structure, but preferably has a branched and/or cyclic structure. In the case of having a branched and/or cyclic structure, it is preferable in terms of having a low crystallinity and readily becoming a liquid with a good fluidity. The compound (By) preferably has a divalent hydrocarbon group. In the compound (By), in terms of obtaining a strong bonding body, a skeleton excluding the carboxyl groups is more preferably composed only of the divalent hydrocarbon group.

Examples of the compound (By) having a linear structure include, but are not limited to, eicosanedioic acid, heneicosanedioic acid, docosanedioic acid, tetracosanedioic acid, triacontanedioic acid, dotriacontanedioic acid, tetracontanedioic acid, pentacontanedioic acid, and hexacontanedioic acid. Examples of the compound (By) having a branched and/or cyclic structure include dimer acid, which is suitably used.

The composition containing metal particles of the disclosure preferably contains 0.1 parts by mass to 3.0 parts by mass, and more preferably 0.3 parts by mass to 2.7 parts by mass, of a total of the compound (Bx) and the compound (By), with respect to 100 parts by mass of the metal particle (A). With the total of the compound (Bx) and the compound (By) in the above range, a bonding body that is excellent particularly in an initial bonding strength and suppresses a decrease in the bonding strength accompanying thermal cycles can be obtained.

### <Dispersion medium (C)>

The bonding paste of the disclosure contains a dispersion medium (C) (excluding the compound (B)). The dispersion medium (C) serves a function of dispersing the metal particle (A) and the compound (B). Further, the dispersion medium (C) serves a role of imparting fluidity to the coating film during the sintering process of silver. The carbon number of the dispersion medium (C) is preferably less than 20.

The dispersion medium (C) can uniformly disperse the metal particle (A) and the compound (B), and specific examples thereof include, but are not limited to, terpineol, dihydroterpineol, dihydroterpinyl acetate, Terusolve MTPH (manufactured by Nippon Terpene Co., Ltd.), Texanol (2,2,4-trimethylpentane-1,3-diol monoisobutyrate), Carbitol, Carbitol acetate, butyl Carbitol, isophorone, γ-butyrolactone, dipropylene glycol monomethyl ether, dipropylene glycol monomethyl ether, dipropylene glycol methyl-n-propyl ether, 3-methoxy-3-methylbutyl acetate, ethylene glycol, propylene glycol diacetate, dipropylene glycol methyl ether acetate, 1,3-butylene glycol, 1,3-butanediol, 1,4-butanediol, 2-ethyl-1,3-hexanediol, diethylene glycol monoethyl ether, diethylene glycol monobutyl ether, diethylene glycol monohexyl ether, triethylene glycol monoethyl ether, triethylene glycol monobutyl ether, tetraethylene glycol monobutyl ether, polyethylene glycol monobutyl ether, diethylene glycol monoethyl ether acetate, diethylene glycol monobutyl ether acetate, and isoparaffin-based solvents included in hydrocarbon-based solvents.

The dispersion medium (C) preferably includes a dispersion medium with a boiling point of 200°C or higher. By including a dispersion medium with a boiling point of 200°C or higher, during the sintering process of silver, since the dispersion medium in the coating film dries and decreases relatively gradually, the coating film can be sintered while maintaining a high fluidity. Accordingly, it becomes possible to improve adhesion with the bonded part and obtain a strong bonding body with fewer defects. A proportion of the dispersion medium with a boiling point of 200°C or higher in a mass of the dispersion medium (C) is preferably 70 mass% or more.

The boiling point of the dispersion medium with a boiling point of 200°C or higher is preferably 240°C or higher, and more preferably 250°C or higher. With the boiling point being 250°C or higher, the coating film can be sintered while maintaining a high fluidity for a longer time. Thus, it is preferable because a strong bonding body with fewer defects is formed, and thermal cycle properties are excellent. Further, from the viewpoint of suppressing residue of the dispersion medium, the boiling point is preferably 350°C or lower. In the case of including multiple types of dispersion media with boiling points of 200°C or higher, the boiling point of the dispersion medium with a boiling point of 200°C or higher may be calculated based on the respective boiling points and mass ratios thereof.

Examples of the dispersion medium with a boiling point of 200°C or higher include, but are not limited to, terpineol, dihydroterpineol, dihydroterpinyl acetate, Terusolve MTPH (manufactured by Nippon Terpene Co., Ltd.), Texanol (2,2,4-trimethylpentane-1,3-diol monoisobutyrate), isophorone, γ-butyrolactone, dipropylene, 1,3-butanediol, 1,4-butanediol, 2-ethyl-1,3-hexanediol, diethylene glycol monoethyl ether, diethylene glycol monobutyl ether, diethylene glycol monohexyl ether, triethylene glycol monoethyl ether, triethylene glycol monobutyl ether, tetraethylene glycol monobutyl ether, diethylene glycol monoethyl ether acetate, diethylene glycol monobutyl ether acetate, polyethylene glycol monobutyl ether, and hydrocarbon-based solvents with boiling points of 200°C or higher. These dispersion media with boiling points of 200°C or higher may each be used alone or in a combination of multiple types.

Among the dispersion media with boiling points of 200°C or higher, diol-based dispersion media such as 1,3-butanediol, 1,4-butanediol, 2-ethyl-1,3-hexanediol, and glycol ether-based dispersion media such as diethylene glycol monohexyl ether, triethylene glycol monoethyl ether, triethylene glycol monobutyl ether, tetraethylene glycol monobutyl ether, and polyethylene glycol monobutyl ether are preferably used. Glycol ether-based dispersion media are more preferable. As the glycol ether-based dispersion media with boiling points of 250°C or higher, diethylene glycol monohexyl ether, triethylene glycol monoethyl ether, triethylene glycol monobutyl ether, tetraethylene glycol monobutyl ether, and polyethylene glycol monobutyl ether are particularly preferably used.

When sintering the bonding paste, in the case where the boiling point of the dispersion medium (C) is lower than the boiling point of the compound (B), it is preferable because the amount of the dispersion medium (C) coexisting with the composition containing metal particles during sintering can be reduced, and the content of the metal particle (A) can be increased.

### <Manufacturing of bonding paste>

By using the metal particle (A) and the compound (B) in combination, the bonding paste of the disclosure is excellent in printability onto a bonded body part due to an excellent fluidity exhibited, even when containing a high concentration of the metal particle (A), that is, even in the case where a content ratio of the dispersion medium (C) is low. As a result, it becomes possible to obtain a strong bonding body with fewer defects.

In the bonding paste, a proportion of the mass of the metal particle (A) in a sum of the masses of the metal particle (A), the compound (B), and the dispersion medium (C) is preferably 80 mass% to 95 mass%, and more preferably 85 mass% to 94 mass%. Further, a proportion of the mass of the metal particle (A) in a mass of the bonding paste is preferably 80 mass% to 95 mass%, and more preferably 85 mass% to 94 mass%. By including the metal particle (A) in the above range, the bonding paste can exhibit a good printability, residue of the dispersion medium (C) in the bonding body can be suppressed, formation of voids resulting from the dispersion medium (C) can be suppressed, and a good bonding strength can be exhibited.

The bonding paste of the disclosure may include additives, and for example, may contain sintering promoters, binder resins, or resin-type dispersants.

Examples of apparatuses for preparing the bonding paste from the metal particle (A), the compound (B), and the dispersion medium (C) include a disper, a three-roll mill, a bead mill, an ultrasonic disperser, a planetary mixer, etc.

### <Bonding body>

A bonding body may be obtained by bonding a first bonded part and a second bonded part with the bonding paste of the disclosure. A method for coating the bonding paste to the bonded body is not particularly limited as long as it is a method capable of uniformly coating on members. Examples thereof include various printing methods such as screen printing, flexographic printing, offset printing, gravure printing, metal mask printing, gravure offset printing, etc., dispensing methods using a dispenser, etc. The bonding paste of the disclosure is excellent in fluidity even when containing a high concentration of metal particles, and is thus preferably used in combination with metal mask printing in particular.

When placing the second bonded part onto the first bonded part to which the bonding paste of the disclosure has been coated, the second bonded part may also be placed while applying a pressure. The pressure may be appropriately set according to a viscosity of the bonding paste and a drying state of the paste, and is preferably 0.1 to 40 MPa, and more preferably 0.3 to 30 MPa.

The sintering conditions for bonding a laminated body obtained by placing the second bonded part onto the first bonded part may be appropriately changed, but examples thereof may include conditions such as 200 to 350°C under atmospheric pressure, nitrogen atmosphere, vacuum, or reducing atmosphere. Examples of a sintering apparatus include a hot air oven, a sintering furnace, an electric furnace, an infrared oven, a reflow oven, a microwave oven, a hot plate, a photo sintering apparatus, etc. These apparatuses may be used appropriately, alone or in a combination of multiple types. Further, a pressure may be applied while performing sintering. The pressure may be appropriately set according to the viscosity of the bonding paste and the drying state of the paste, but is preferably 0.1 to 40 MPa, and more preferably 0.3 to 30 MPa.

Prior to the sintering process, a preliminary drying process may be appropriately arranged for the purpose of removing organic components from the bonding coating film. Examples thereof include conditions in a range of 60 to 220°C using an apparatus similar to the sintering apparatus.

Examples of a preferable method for bonding the two bonded parts include a method in which the bonding paste of the disclosure is coated to the first bonded part, then the second bonded part is placed thereon, and sintering is performed by heating to about 300°C at a heating rate of about 2°C to 30°C/min. After the heating ends, the temperature is preferably maintained at a temperature higher than the temperature at the end of the heating for about 10 minutes to 2 hours.

A type of the bonded part is not particularly limited, and examples thereof include metal materials, semiconductor materials, plastic materials, ceramic materials, as well as electronic elements. Examples of metals includes copper, gold, and aluminum. Examples of semiconductor materials include silicon, germanium, gallium arsenide, gallium phosphide, cadmium sulfide, silicon nitride, graphite, yttrium oxide, magnesium oxide, silicon carbide, and gallium nitride. Examples of plastic materials include polyimide, polyethylene, polypropylene, polyethylene terephthalate, polycarbonate, and polyethylene naphthalate. Examples of ceramic materials include glass and silicon. Examples of electronic elements include semiconductor elements, LED elements, and power device elements.

The first bonded part and the second bonded part may be members of the same type and may also be members of different types. To increase the bonding strength at the bonded site of the bonded part, a corona treatment, a plating treatment, etc. may be applied to the surface of the bonded part.

There is no limitation on a thickness of the bonding layer formed when bonding the bonded parts using the composition containing metal particles or the bonding paste of the disclosure, but the thickness is preferably 3 µm to 500 µm, more preferably 10 µm to 200 µm, and even more preferably 20 µm to 100 µm.

### Examples

The disclosure will be described in detail below with reference to Examples and Comparative Examples, but the technical scope of the disclosure is not limited thereto. In the examples, unless otherwise specified, "parts" and "%" represent "parts by mass" and "mass%", respectively. Numerical values in the tables represent "parts" unless otherwise specified.

### <Manufacturing of metal particle>

### (Manufacturing Example 1) Metal particle A1

200 parts of toluene and 22.3 parts of silver hexanoate were mixed while stirring at 25°C under nitrogen atmosphere to make a 0.5 M solution. Then, 1.6 parts of diethylaminoethanol and 0.28 parts of oleic acid were added and dissolved as dispersants. Afterward, 73.1 parts of a 20% concentration aqueous solution of succinic acid dihydrazide (hereinafter referred to as SUDH) was added dropwise as a reducing agent, and the color of the liquid changed from pale yellow to dark brown. To further promote the reaction, the temperature was raised to 40°C and the reaction was carried out. After standing and separation, the aqueous phase was removed to eliminate excess reducing agent and impurities. Furthermore, distilled water was added to the toluene layer several times, and washing and separation were repeated. Then, toluene was added and centrifuged, a supernatant was removed, and the process was repeated twice. The precipitate was dried to obtain a metal particle A1 in which a silver particle was coated with hexanoic acid and oleic acid. A particle size of the metal particle A1 was obtained according to a method to be described later, and d50 was 210 nm.

### (Manufacturing Example 2) Metal particle A2

A metal particle A2 was obtained in the same manner as in Manufacturing Example 1, except that diethylaminoethanol was set to 1.8 parts and the amount of oleic acid was set to 0.31 parts. d50 was 185 nm.

### (Manufacturing Example 3) Metal particle A3

A metal particle A3 was obtained in the same manner as in Manufacturing Example 1, except that diethylaminoethanol was set to 1.2 parts and the amount of oleic acid was set to 0.18 parts. d50 was 290 nm.

### (Manufacturing Example 4) Metal particle A4

A metal particle A4 was obtained in the same manner as in Manufacturing Example 1, except that diethylaminoethanol was set to 1.0 part and the amount of oleic acid was set to 0.14 parts. d50 was 390 nm.

### (Manufacturing Example 5) Metal particle A5

A metal particle A5 was obtained in the same manner as in Manufacturing Example 1, except that diethylaminoethanol was set to 0.6 parts and the amount of oleic acid was set to 0.070 parts. d50 was 1100 nm.

### (Manufacturing Example 6) Metal particle A6

A metal particle A6 was obtained in the same manner as in Manufacturing Example 1, except that diethylaminoethanol was set to 2.3 parts and the amount of oleic acid was set to 2.8 parts. d50 was 20 nm.

### (Manufacturing Example 7) Metal particle A7

A metal particle A7 was obtained in the same manner as in Manufacturing Example 1, except that diethylaminoethanol was set to 2.1 parts and the amount of oleic acid was set to 0.71 parts. d50 was 85 nm.

### (Manufacturing Example 8) Metal particle A8

A metal particle A8 was obtained in the same manner as in Manufacturing Example 1, except that diethylaminoethanol was set to 2.4 parts and the amount of oleic acid was set to 0.42 parts. d50 was 120 nm.

### (Manufacturing Example 9) Metal particle A9

A metal particle A9 was obtained in the same manner as in Manufacturing Example 1, except that diethylaminoethanol was set to 2.0 parts and the amount of oleic acid was set to 0.34 parts. d50 was 155 nm.

### (Manufacturing Example 10) Metal particle A10

A metal particle A10 was obtained in the same manner as in Manufacturing Example 1, except that diethylaminoethanol was set to 1.4 parts and the amount of oleic acid was set to 0.09 parts. d50 was 600 nm.

### (Manufacturing Example 11) Metal particle A11

A metal particle A11 was obtained in the same manner as in Manufacturing Example 1, except that diethylaminoethanol was set to 2.2 parts and the amount oleic acid was set to 0.38 parts. d50 was 140 nm.

### [Measurement of particle size]

Isopropyl alcohol was added to each metal particle (A) and dispersed using an ultrasonic disperser to obtain a 0.5 mass% dispersion. Particle sizes of metal particles in the obtained dispersion were measured using Nanotrac UPA-EX150 (manufactured by Nikkiso Co., Ltd.), and an average particle size (d50) was obtained. Among the metal particles manufactured according to the above method, the metal particles A1 to A4, A8 to A9, and A11 correspond to the metal particle (A) of the disclosure, and the metal particles A5 to A7 and A10 correspond to metal particles that are not the metal particle (A).

### <Manufacturing of compound (B)>

### (Manufacturing Example 12) Trimer triol (Compound B4)

Referring to a method described in Japanese Patent Application Laid-Open No. H10-67835, trimer triol was synthesized as follows. Under nitrogen atmosphere, 1000 g of an unsaturated fatty acid ester mixture containing 75% of methyl oleate, 15% of methyl linoleate, and 9% of methyl stearate, and 70 g of activated clay were reacted in an autoclave at 230°C for 5 hours. A catalyst was filtered and separated from this reaction liquid, and vacuum distillation was performed to obtain 115 g of trimer acid trimethyl ester. In a flask including a dropping funnel, a cooling tube, a thermometer, and a stirrer, 6.4 g of lithium aluminum hydride and 240 ml of diethyl ether were carefully mixed under nitrogen atmosphere to prepare a dispersion of lithium aluminum hydride. Under nitrogen atmosphere, while stirring the above dispersion, a solution obtained by diluting 50 g of trimer acid trimethyl ester with 70 ml of diethyl ether was added dropwise over 120 minutes, and the reaction was carried out while maintaining the temperature at about 30°C or below. After the drop addition, stirring was continued for about 40 minutes, and then 13 g of ion-exchanged water was carefully added dropwise while cooling to deactivate the remaining reducing agent. This reaction liquid was transferred to a flask holding 70 g of ice water, and 50 g of 10% sulfuric acid solution was added. After standing, an appropriate amount of diethyl ether was added to this flask to extract a product. The ether layer was repeatedly washed with water until becoming neutral, and the diethyl ether was distilled off to obtain 31 g of trimer triol with a carbon number of 54, composed of three hydroxyl groups and a trivalent hydrocarbon group having branched and cyclic structures. The obtained trimer triol was a viscous liquid at 25°C.

Compounds (B) other than the above compound B4 used the following materials. A compound B8 and a compound B9 are compounds that are not the compound (B). Carbon numbers, material names, and states of matter at 25°C are indicated in parentheses. Compounds B1 to B3 and B5 to B7, and a compound 10 were manufactured by Croda Japan K.K., and compounds B8, B9, and B11 were reagents from Sigma-Aldrich.
Compound B1: Pripol 1009 (hydrogenated dimer acid with a carbon number of 36; composed of two carboxyl groups and a divalent hydrocarbon group having branched and cyclic structures; liquid)
Compound B2: Pripol 1040 (trimer acid with a carbon number of 54; composed of three carboxyl groups and a trivalent hydrocarbon group having branched and cyclic structures; liquid)
Compound B3: Pripol 2033 (dimer diol with a carbon number of 36; composed of two hydroxyl groups and a divalent hydrocarbon group having branched and cyclic structures; liquid)
Compound B4: Trimer triol obtained in Manufacturing Example 12 (carbon number 54; liquid)
Compound B5: Priamine 1071 (a mixture of dimer diamine with a carbon number of 36 (composed of two amino groups and a divalent hydrocarbon group having branched and cyclic structures; liquid) and trimer triamine with a carbon number of 54 (composed of three amino groups and a trivalent hydrocarbon group having branched and cyclic structures; liquid))
Compound B6: Priamine 1075 (dimer diamine with a carbon number of 36; composed of two amino groups and a divalent hydrocarbon group having branched and cyclic structures; liquid)
Compound B7: Docosanedioic acid (linear dibasic acid with a carbon number of 22; solid)
Compound B10: Pripol 1004 (hydrogenated dimer acid with a carbon number of 44; composed of two carboxyl groups and a divalent hydrocarbon group having branched and cyclic structures; liquid)
Compound B8: Oleic acid (monovalent linear fatty acid with a carbon number of 18; liquid)
Compound B9: Malonic acid (divalent linear fatty acid with a carbon number of 3; solid)
Compound B11: 1,2,3-Propanetricarboxylic acid (trivalent linear fatty acid with a carbon number of 6; solid)

### <Dispersion medium (C)>

The following materials were used as the dispersion medium (C). Manufacturer names, supplementary information, and boiling points are indicated in parentheses.
Dispersion medium C1: Dihydroterpineol (manufactured by Nippon Terpene Chemicals, Inc.; boiling point 207°C)
Dispersion medium C2: Isobornyl cyclohexanol (manufactured by Nippon Terpene Chemicals, Inc.; boiling point 318°C)
Dispersion medium C3: Isopar L (manufactured by Andoh Parachemie Co., Ltd.; isoparaffin with a boiling point of 199°C)
Dispersion medium C4: Texanol (boiling point 244°C)
Dispersion medium C5: Triethylene glycol monobutyl ether (glycol ether-based; boiling point 278°C)
Dispersion medium C6: Triethylene glycol monomethyl ether (glycol ether-based; boiling point 248°C)
Dispersion medium C7: 2-Ethyl-1,3-hexanediol (diol-based; boiling point 244°C)
Dispersion medium C8: 1-Decanol (boiling point 233°C)
Dispersion medium C9: Diethylene glycol monomethyl ether (glycol ether-based; boiling point 193°C)
Dispersion medium C10: 1-Octanol (boiling point 194°C)

### <Manufacturing of bonding paste>

### [Example 1-1]

The metal particle A1 (92 parts), dihydroterpineol (8 parts), and the compound B1 (1 part) were mixed using a planetary mixer to prepare a bonding paste.

### [Examples 1-2 to 1-32], [Comparative Examples 1-1 to 1-8]

Bonding pastes were obtained in the same manner as in Example 1-1, except that the types and formulation amounts of materials were changed according to the compositions described in Table 1 to Table 2.

### [Examples 2-1 to 2-39], [Comparative Examples 2-1 to 2-6]

Bonding pastes were obtained in the same manner as in Example 1-1, except that the types and formulation amounts of materials were changed according to the compositions described in Table 3 to Table 5.

### [Examples 3-1 to 3-45], [Comparative Examples 3-1 to 3-2]

Bonding pastes were obtained in the same manner as in Example 1-1, except that the types and formulation amounts of materials were changed according to the compositions described in Table 6 to Table 8.

### <Evaluation (1) on bonding paste>

Using the bonding pastes obtained in Examples and Comparative Examples, a bonding body 1 was produced according to a method to be described later. The obtained bonding body 1 was evaluated as follows. The results are shown in Table 1 to Table 8. In the tables, unless otherwise specified, numerical values represent "parts", and blank columns indicate that the component was not added.

### [Production of bonding body 1]

The obtained bonding pastes were each printed once on a plated surface of a bonded part 1 described below under printing conditions described below. Then, a plated surface of a bonded part 2 (chip) described below was placed facing the bonding paste surface, and heated under sintering conditions described below to obtain each bonding body.

### [Bonded part 1]

Gold-plated copper substrate: 20 mm × 20 mm × 3 mm

### [Bonded part 2]

Gold-plated SiC chip: 5 mm × 5 mm × 0.3 mm
[Printing conditions (metal mask printing)]
Metal mask: opening 4 mm square, plate thickness 50 µm (manufactured by Seria Corporation)
Metal squeegee: 40 mm × 250 mm, thickness 1 mm (manufactured by Seria Corporation)

### [Sintering conditions]

The bonding body before sintering was placed in a hot air oven, and the temperature was raised from 25°C to 300°C at 2°C/minute. After reaching 300°C, the temperature was maintained at 300°C for 2 hours.

### [Metal mask printability]

In the production of the bonding body 1, printability was evaluated according to the following criteria.

### (Evaluation criteria)

A: Printing on the bonded part 1 was possible.
C: Printing on the bonded part 1 was not possible.

### [Bonding strength (initial, after thermal cycle test)]

A bonding strength (die shear strength) of the obtained bonding body 1 was measured with the following measurement apparatus and test conditions. In Table 2, "-" indicates that this evaluation was not performed because printing was not possible.

### [Test conditions]

Measurement apparatus: Universal bond tester (manufactured by Dage Japan Co., Ltd., 4000 series)
Measurement height: 100 µm
Measurement speed: 500 µm/s
Specifically, the bonding body 1 was fixed at the portion of the bonded part 1, and a position at a height of 100 µm from the interface between the bonded part 1 and the bonding layer toward the bonded part 2 was pressed at a speed of 500 µm/s to obtain a bonding strength at which the bond was destroyed. A bonding strength (initial strength) immediately after production of the bonding body 1 and a bonding strength after a cycle test described below were measured and evaluated based on the following evaluation criteria. Higher numerical values of the adhesion strength are better, with 15 MPa or higher being in the range of practical use. Higher numerical values of the evaluation criteria are better, with a numerical value of 2 or less in the evaluation criteria indicating poor performance.

### (Evaluation criteria)

5: 30 MPa or higher
4: 20 MPa or higher and less than 30 MPa
3: 15 MPa or higher and less than 20 MPa
2: 5 MPa or higher and less than 15 MPa
1: Less than 5 MPa

### [Thermal cycle test]

A process of holding the bonding body 1 at -40°C for 30 minutes, and then holding at 25°C for 15 minutes and holding at 150°C for 30 minutes was taken as one cycle, and storage of 500 cycles was performed. Afterward, evaluation was performed according to the same procedure and criteria as the above bonding strength evaluation.

### <Reference: evaluation (2) on bonding paste>

Using the bonding pastes obtained in Examples 2-1 to 2-36, a bonding body 2-1 was produced according to a method to be described later. Further, using the bonding paste obtained in Example 2-37 (equivalent to Example 2-20), a bonding body 2-2 was produced according to a method to be described later. The following evaluations were performed on the obtained bonding body 2-1 and the obtained bonding body 2-2 (hereinafter simply referred to as a bonding body 2). The results are shown in Table 3 to Table 4. In the tables, unless otherwise specified, numerical values represent parts, and blank columns indicate that the component was not added.

### [Production of bonding body 2-1]

The bonding pastes obtained in Examples 2-1 to 2-36 were each printed once on one surface of a bonded part 1 described below under printing conditions described below. Then, a plated surface of a bonded part 2 (chip) described below was placed facing the bonding paste surface, and heated under sintering conditions described below to obtain each bonding body.

### [Bonded part 1]

Copper substrate (oxygen-free copper (C1020)): 20 mm × 20 mm × 1 mm

### [Bonded part 2]

Gold-plated SiC chip: 5 mm × 5 mm × 0.3 mm

### [Printing conditions (metal mask printing)]

Metal mask: opening 4 mm square, plate thickness 50 µm (manufactured by Seria Corporation)
Metal squeegee: 40 mm × 250 mm, thickness 1 mm (manufactured by Seria Corporation)

### [Sintering conditions]

The bonding body before sintering was placed in a sintering furnace, and under nitrogen atmosphere, the temperature was raised from 25°C to 300°C at 2°C/minute. After reaching 300°C, the temperature was maintained at 300°C for 2 hours.

### [Production of bonding body 2-2]

Similar to the bonding body 1, the bonding paste obtained in Example 2-37 was printed once on one surface of the bonded part 1, and then placed in a hot air oven and dried at 170°C for 10 minutes. Next, a plated surface of the bonded part 2 (chip) was placed facing the dried bonding paste surface, and with a pressure of 20 MPa applied from above the bonded part 2, the temperature was raised from room temperature to 300°C at 20°C/minute. After reaching 300°C, the temperature was maintained at the same temperature for 10 minutes to obtain a bonding body.

### [Bonding strength (initial, after thermal cycle test)]

A bonding strength (die shear strength) of the obtained bonding body 2 was measured with the following measurement apparatus and test conditions.

### [Test conditions]

Measurement apparatus: Universal bond tester (manufactured by Dage Japan Co., Ltd., 4000 series)
Measurement height: 100 µm
Measurement speed: 500 µm/s

Specifically, the bonding body 2 was fixed at the portion of the bonded part 1, and a position at a height of 100 µm from the interface between the bonded part 1 and the bonding layer toward the bonded part 2 was pressed at a speed of 500 µm/s to obtain a bonding strength at which the bonding was destroyed. A bonding strength (initial bonding strength) immediately after production of the bonding body and a bonding strength (bonding strength after 500 cycles) after a cycle test described below were measured and evaluated based on the following evaluation criteria. Higher values of the bonding strength and the evaluation criteria are better.

### (Evaluation criteria)

5: 30 MPa or higher
4: 20 MPa or higher and less than 30 MPa
3: 15 MPa or higher and less than 20 MPa
2: 5 MPa or higher and less than 15 MPa
1: Less than 5 MPa

### [Thermal cycle test]

A process of holding the bonding body 2 at -40°C for 30 minutes, and then holding at 25°C for 15 minutes and holding at 150°C for 30 minutes was taken as one cycle, and storage of 500 cycles was performed. Afterward, evaluation was performed according to the same procedure and criteria as the bonding strength evaluation method described above.

### <Reference: evaluation (3) on bonding paste>

Using the bonding pastes obtained in Examples 3-1 to 3-40, a bonding body 3-1 was produced according to a method to be described later. Further, using the bonding paste obtained in Example 3-41 (equivalent to Example 3-13), a bonding body 3-2 was produced according to a method to be described later. The following evaluations were performed on the obtained bonding body 3-1 and the obtained bonding body 3-2 (hereinafter simply referred to as a bonding body 3). The results are shown in Table 6 to Table 7. In the tables, unless otherwise specified, numerical values represent parts, and blank columns indicate that the component was not added.

### [Production of bonding body 3-1]

The bonding pastes obtained in Examples 3-1 to 3-40 were each printed once on one surface of a bonded part 1 described below under printing conditions described below. Then, a plated surface of a bonded part 2 (chip) described below was placed facing the bonding paste surface, and heated under sintering conditions described below to obtain each bonding body.

### [Bonded part 1]

Copper substrate (oxygen-free copper (C1020)): 20 mm × 20 mm × 2 mm

### [Bonded part 2]

Gold-plated SiC chip: 5 × 5 × 0.3 mm

### [Printing conditions (metal mask printing)]

Metal mask: opening 4 mm square, plate thickness 50 µm (manufactured by Seria Corporation)
Metal squeegee: 40 mm × 250 mm, thickness 1 mm (manufactured by Seria Corporation)

### [Sintering conditions]

The bonding body before sintering was placed in a sintering furnace, and under nitrogen atmosphere, the temperature was raised from 25°C to 300°C at 2°C/minute. After reaching 300°C, the temperature was maintained at 300°C for 2 hours.

### [Production of bonding body 3-2]

Similar to the bonding body 3-1, the bonding paste obtained in Example 3-41 was printed once on one surface of the bonded part 1, and then placed in a hot air oven and dried at 170°C for 10 minutes. Afterward, a plated surface of the bonded part 2 (chip) was placed facing the dried bonding paste surface, and with a pressure of 20 MPa applied from above the bonded part 2, the temperature was raised from room temperature to 300°C at 20°C/minute. After reaching 300°C, the temperature was maintained at the same temperature for 10 minutes to obtain a bonding body.

### [Bonding strength (initial, after thermal cycle test)]

A bonding strength (die shear strength) of the obtained bonding body 3 was measured with the following measurement apparatus and test conditions.

### [Test conditions]

Measurement apparatus: Universal bond tester (manufactured by Dage Japan Co., Ltd., 4000 series)
Measurement height: 100 µm
Measurement speed: 500 µm/s

Specifically, the bonding body 3 was fixed at the portion of the bonded part 1, and a position at a height of 100 µm from the interface between the bonded part 1 and the bonding layer toward the bonded part 2 was pressed at a speed of 500 µm/s to obtain a bonding strength at which the bond was destroyed. A bonding strength (initial bonding strength) immediately after production of the bonding body 3 and a bonding strength (bonding strength after 500 cycles) after a cycle test described below were measured and evaluated based on the following evaluation criteria. Higher numerical values of the adhesion strength and the evaluation criteria are better.

### (Evaluation criteria)

5: 30 MPa or higher
4: 20 MPa or higher and less than 30 MPa
3: 15 MPa or higher and less than 20 MPa
2: 5 MPa or higher and less than 15 MPa
1: Less than 5 MPa

### [Thermal cycle test]

A process of holding the bonding body 3 at -40°C for 30 minutes, and then holding at 25°C for 15 minutes and holding at 150°C for 30 minutes was taken as one cycle, and storage of 500 cycles was performed. Afterward, evaluation was performed according to the same procedure and criteria as the above bonding strength evaluation method.

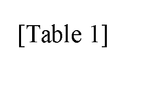

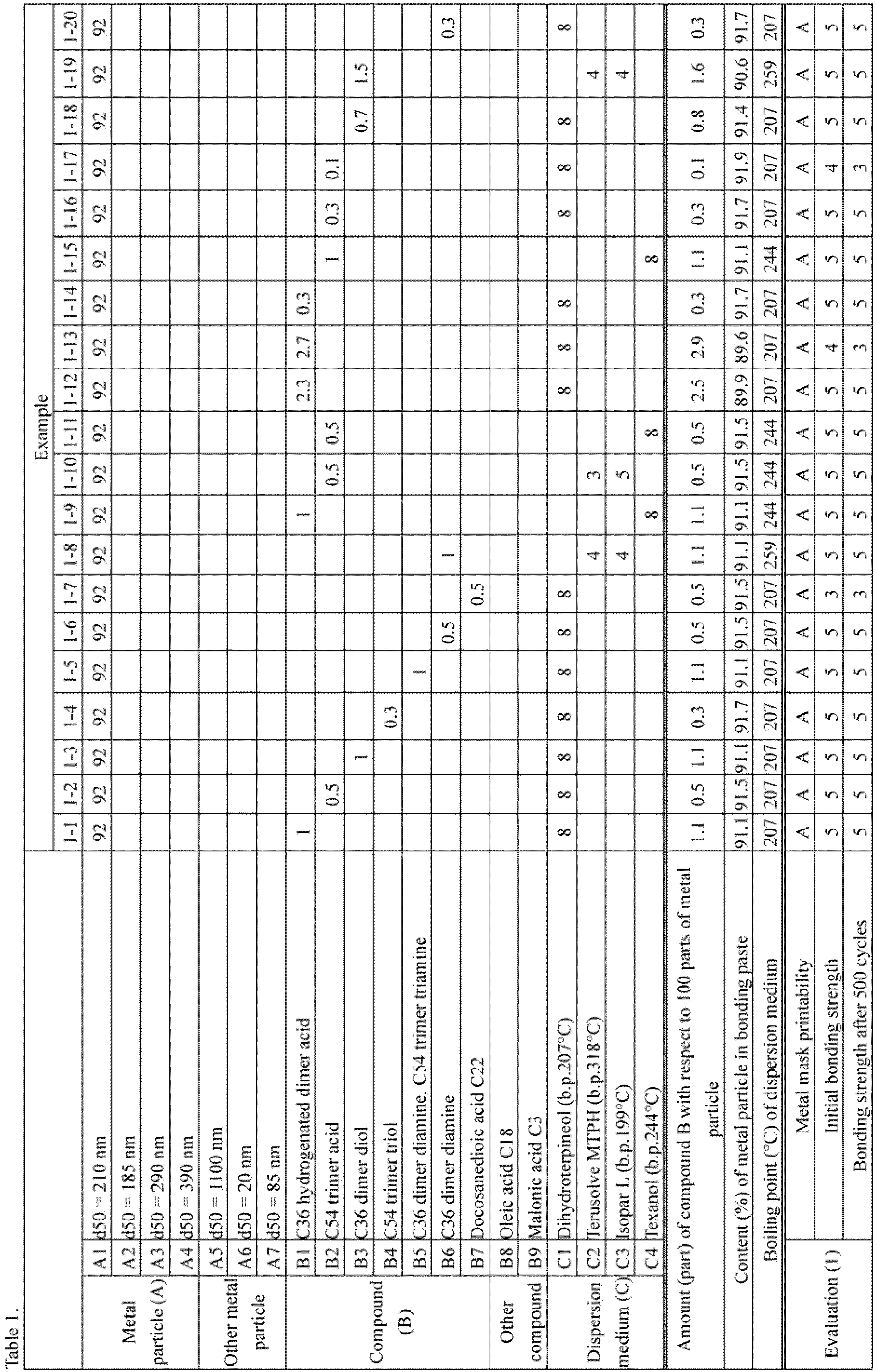

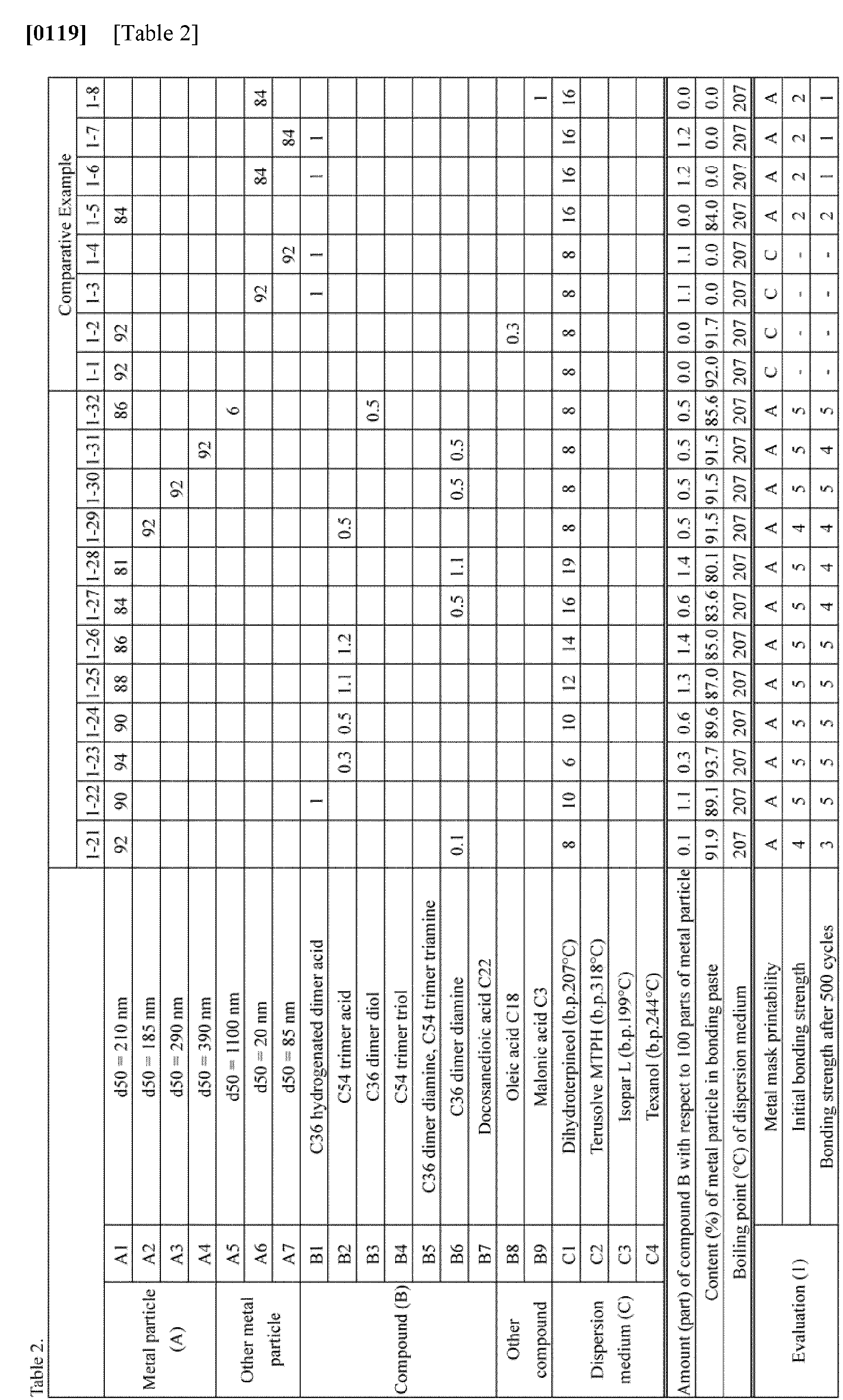

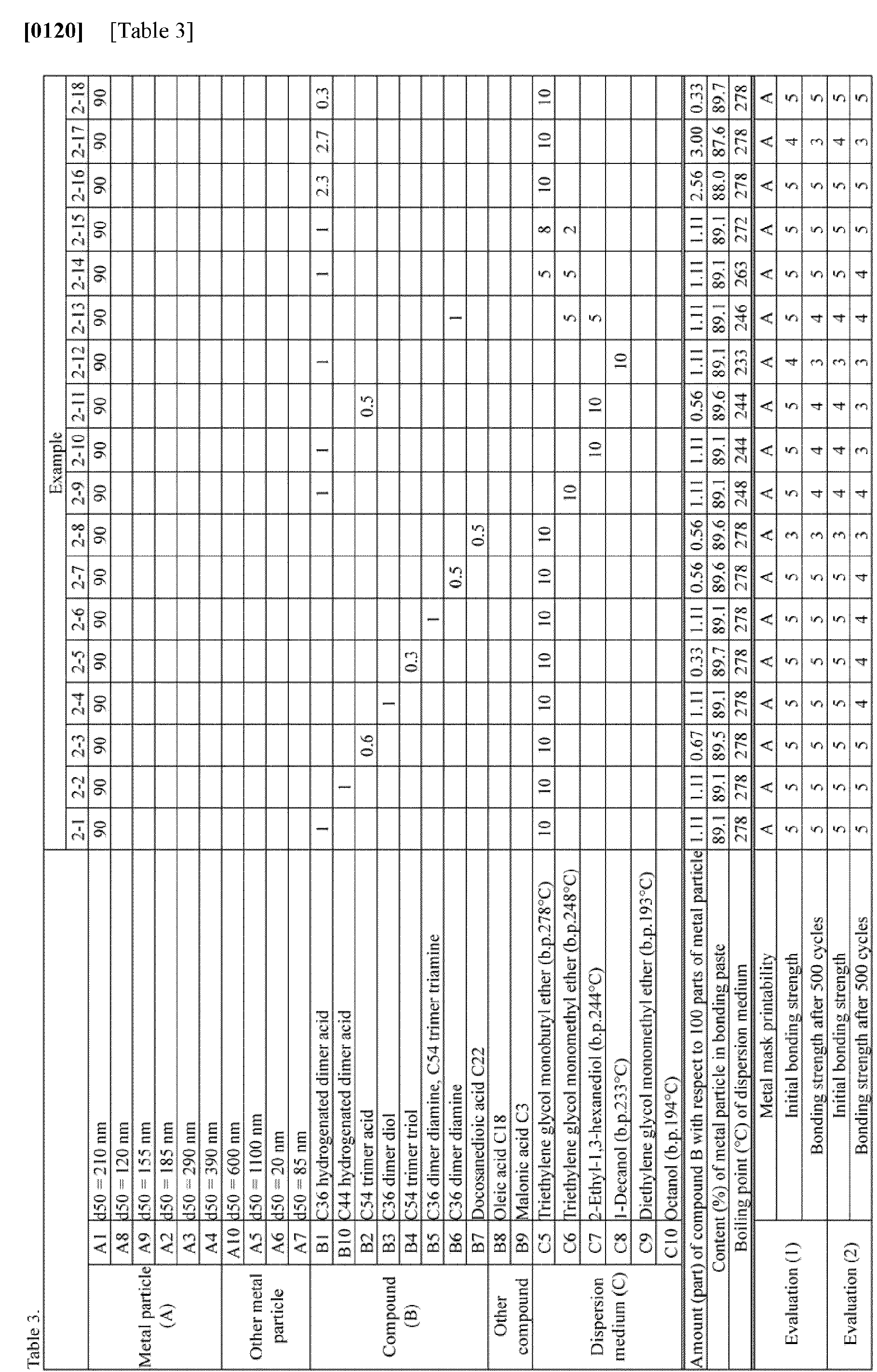

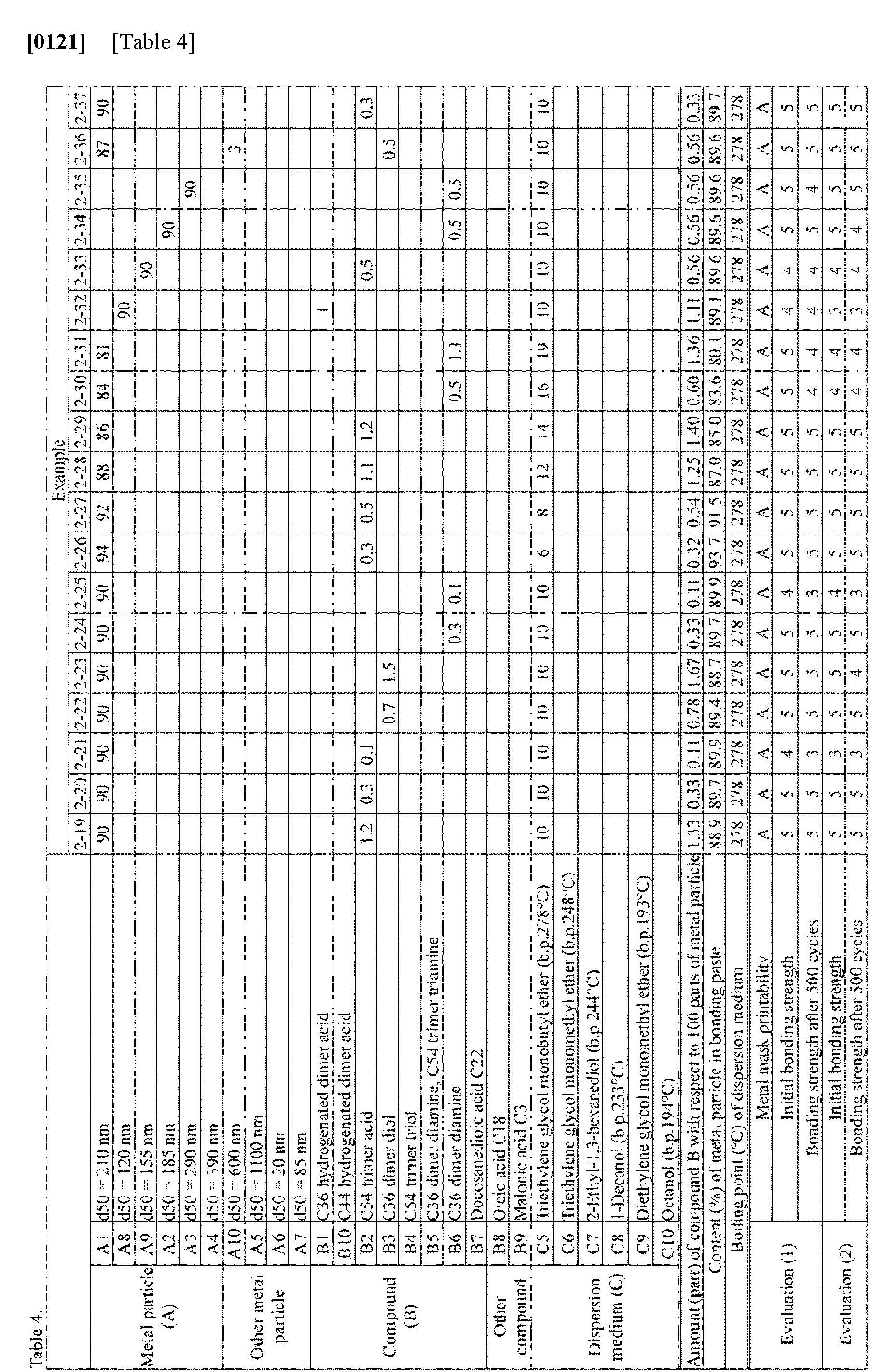

### [Table 5]

**Table 5.**

| | | | Example | | Comparative Example | | | | | |
|---|---|---|---|---|---|---|---|---|---|---|
| | | | 2-38 | 2-39 | 2-1 | 2-2 | 2-3 | 2-4 | 2-5 | 2-6 |
| Metal particle (A) | A1 | d50 = 210 nm | 90 | 90 | 90 | 90 | | | | |
| | A8 | d50 = 120 nm | | | | | | | | |
| | A9 | d50 = 155 nm | | | | | | | | |
| | A2 | d50 = 185 nm | | | | | | | | |
| | A3 | d50 = 290 nm | | | | | | | | |
| | A4 | d50 = 390 nm | | | | | | | | |
| Other metal particle | A10 | d50 = 600 nm | | | | | | | | 50 |
| | A5 | d50 *=* 1100 nm | | | | | 90 | | | |
| | A6 | d50 = 20 nm | | | | | | 90 | | 15 |
| | A7 | d50 = 85 nm | | | | | | | 90 | 25 |
| Compound (B) | B1 | C36 hydrogenated dimer acid | 1 | 1 | | | 1 | 1 | 1 | 1 |
| | B10 | C44 hydrogenated dimer acid | | | | | | | | |
| | B2 | C54 trimer acid | | | | | | | | |
| | B3 | C36 dimer diol | | | | | | | | |
| | B4 | C54 trimer triol | | | | | | | | |
| | B5 | C36 dimer diamine, C54 trimer triamine | | | | | | | | |
| | B6 | C36 dimer diamine | | | | | | | | |
| | B7 | Docosanedioic acid C22 | | | | | | | | |
| Other compound | B8 | Oleic acid C18 | | | 0.3 | | | | | |
| | B9 | Malonic acid C3 | | | | 0.3 | | | | |
| Dispersion medium (C) | C5 | Triethylene glycol monobutyl ether (b.p.278°C) | | | 10 | 10 | 10 | 10 | 10 | 10 |
| | C6 | Triethylene glycol monomethyl ether (b.p.248°C) | | | | | | | | |
| | C7 | 2-Ethyl-1,3-hexanediol (b.p.244°C) | | | | | | | | |
| | C8 | 1-Decanol (b.p.233°C) | | | | | | | | |
| | C9 | Diethylene glycol monomethyl ether (b.p.193°C) | 10 | | | | | | | |
| | C10 | Octanol (b.p. 194°C) | | 10 | | | | | | |
| Amount (part) of compound B with respect to 100 parts of metal particle | | | 1.11 | 1.11 | 0.00 | 0.00 | 1.11 | 1.11 | 1.11 | 1.11 |
| Content (%) of metal particle in bonding paste | | | 89.1 | 89.1 | 89.7 | 89.7 | 89.1 | 89.1 | 89.1 | 89.1 |
| Boiling point (°C) of dispersion medium | | | 193 | 194 | 278 | 278 | 278 | 278 | 278 | 278 |
| Evaluation (1) | | Metal mask printability | A | A | C | C | C | C | A | A |
| | | Initial bonding strength | 3 | 3 | - | - | - | - | 3 | 3 |
| | | Bonding strength after 500 cycles | 3 | 3 | - | - | - | - | 1 | 1 |

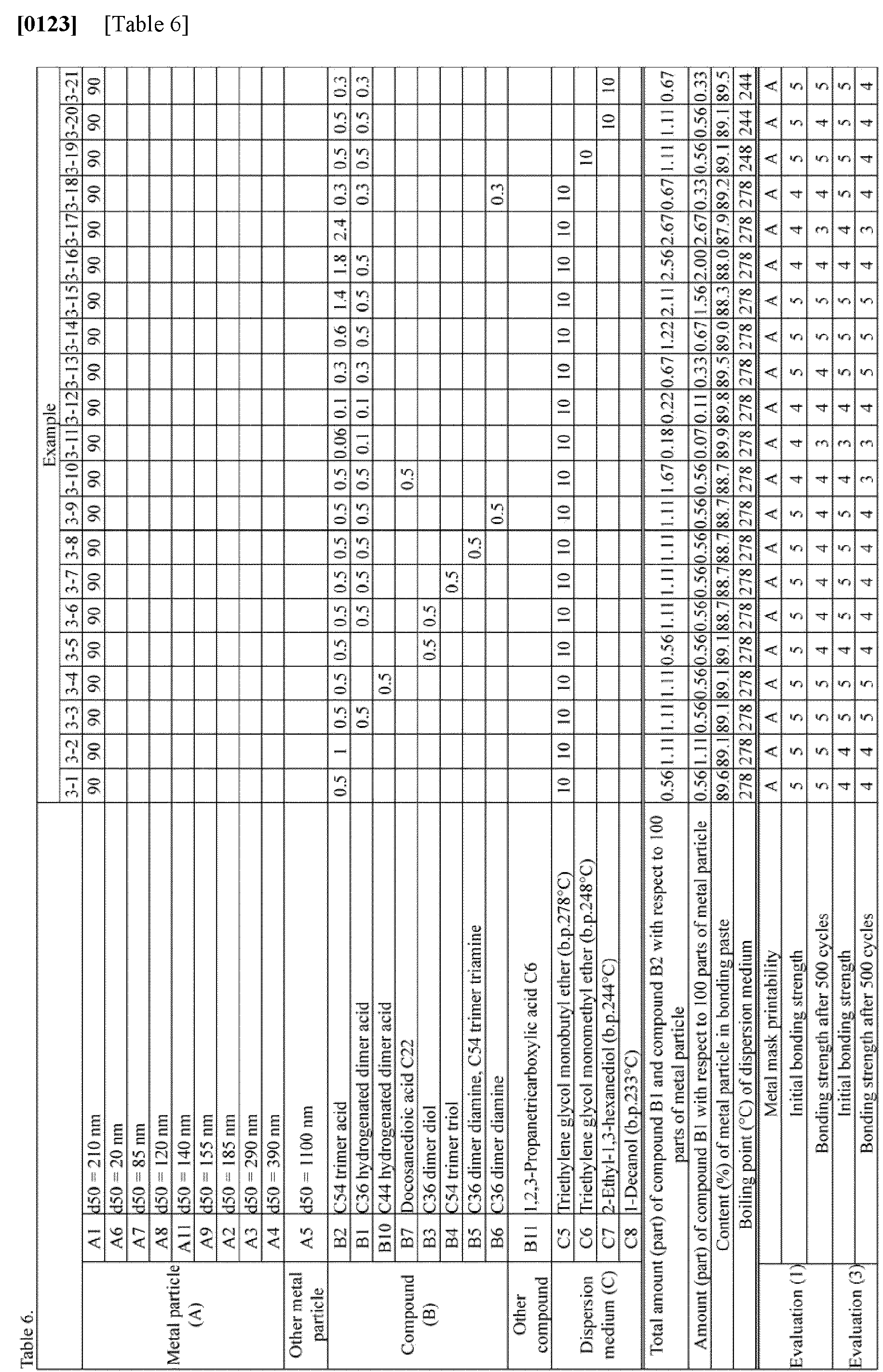

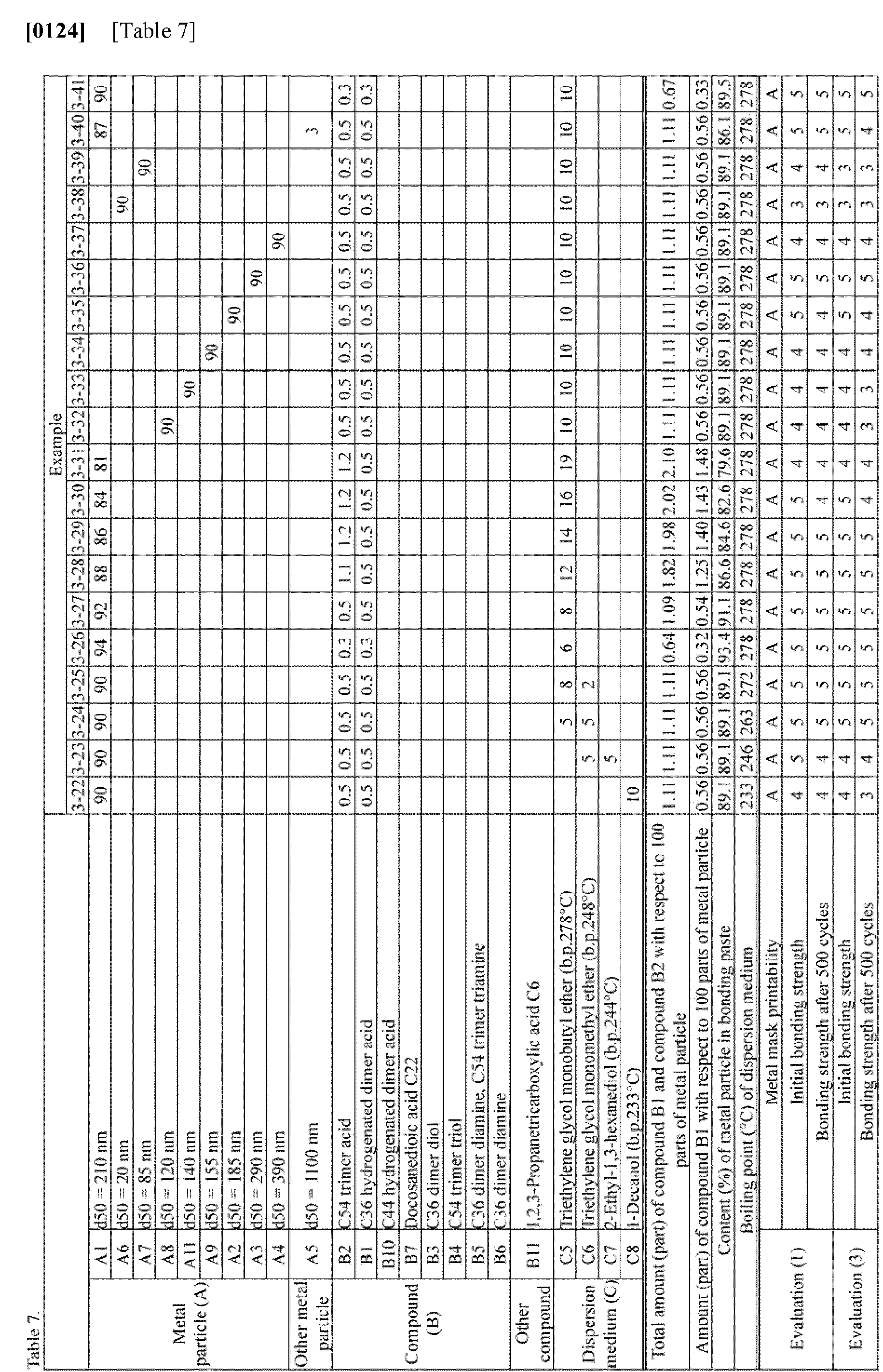

### [Table 8]

**Table 8.**

| | | | Example | | | | Comparative Example | |
|---|---|---|---|---|---|---|---|---|
| | | | 3-42 | 3-43 | 3-44 | 3-45 | 3-1 | 3-2 |
| Metal particle (A) | A1 | d50 = 210 nm | 90 | 90 | 90 | 90 | 90 | |
| | A6 | d50 = 20 nm | | | | | | |
| | A7 | d50 = 85 nm | | | | | | |
| | A8 | d50 = 120 nm | | | | | | |
| | A11 | d50 = 140 nm | | | | | | |
| | A9 | d50 = 155 nm | | | | | | |
| | A2 | d50 = 185 nm | | | | | | |
| | A3 | d50 = 290 nm | | | | | | |
| | A4 | d50 = 390 nm | | | | | | |
| Other metal particle | A5 | d50 = 1100 nm | | | | | | 90 |
| Compound (B) | B2 | C54 trimer acid | 0.04 | 0.04 | 3 | | | 1 |
| | B1 | C36 hydrogenated dimer acid | | 0.1 | | | | |
| | B10 | C44 hydrogenated dimer acid | | | | | | |
| | B7 | Docosanedioic acid C22 | | | | 1 | | |
| | B3 | C36 dimer diol | | | | | | |
| | B4 | C54 trimer triol | | | | | | |
| | B5 | C36 dimer diamine, C54 trimer triamine | | | | | | |
| | B6 | C36 dimer diamine | | | | | | |
| Other compound | B11 | 1,2,3-Propanetricarboxylic acid C6 | | | | | 1 | |
| Dispersion medium (C) | C5 | Triethylene glycol monobutyl ether (b.p.278°C) | 10 | 10 | 10 | 10 | 10 | 10 |
| | C6 | Triethylene glycol monomethyl ether (b.p.248°C) | | | | | | |
| | C7 | 2-Ethyl-1,3-hexanediol (b.p.244°C) | | | | | | |
| | C8 | 1-Decanol (b.p.233°C) | | | | | | |
| Total amount (part) of compound B1 and compound B2 with respect to 100 parts of metal particle | | | 0.04 | 0.16 | 3.33 | 1.11 | 0.00 | 1.11 |
| Amount (part) of compound B1 with respect to 100 parts of metal particle | | | 0.04 | 0.04 | 3.33 | 0.00 | 0.00 | 1.11 |
| Content (%) of metal particle in bonding paste | | | 90.0 | 89.9 | 87.4 | 89.1 | 89.1 | 0.0 |
| Boiling point (°C) of dispersion medium | | | 278 | 278 | 278 | 278 | 278 | 278 |
| Evaluation (1) | | Metal mask printability | A | A | A | A | A | A |
| | | Initial bonding strength | 3 | 4 | 4 | 3 | 1 | 1 |
| | | Bonding strength after 500 cycles | 3 | 3 | 3 | 3 | 1 | 1 |

According to the results in Table 1 to Table 8, in the case of using the bonding pastes of Comparative Examples, the bonding strength was significantly low, and upon observing the samples destroyed after the die shear test, the destruction occurred at the interface between the gold-plated SiC chip and the bonding layer.

In contrast, in the case of using the bonding pastes of Examples, the bonding strength was very high. It has been confirmed that, using the bonding pastes of Examples, even in the case of containing the metal particle at a high concentration, printability is excellent, the bonding strength is very high, and after performing the thermal cycle test, a decrease in the bonding strength is also suppressed.

In particular, it has been confirmed that the bonding paste containing the dispersion medium (C) including a dispersion medium with a boiling point of 200°C or higher has a very high bonding strength even in the case of using, as the bonded part, a copper substrate that has not been subjected to plating treatment and is less likely to exhibit thermal cycle, and after performing the thermal cycle test, a decrease in the bonding strength is also suppressed.

Further, it has been confirmed that the bonding paste, which contains a compound having carboxyl group in a functional group quantity of 3 and having a carbon number of 20 to 80 in a range of 0.05 parts by mass to 2.7 parts by mass with respect to 100 parts by mass of the metal particle (A), has a very high bonding strength, even in the case of using, as the bonded part, a copper substrate that has not being subjected to plating treatment, is relatively thick with a thickness of 2 mm, and is prone to deterioration in thermal cycle. Also, after performing the thermal cycle test, a decrease in the bonding strength is suppressed.

## Claims

1. A composition containing metal particles, comprising:
a metal particle (A) with an average particle size of 100 nm to 500 nm; and a compound (B) with a carbon number of 20 to 80 having a functional group (b) in a quantity of 2 or more, the functional group (b) being any one selected from hydroxyl group, carboxyl group, and amino group.

2. The composition containing metal particles according to claim 1, wherein the quantity of the functional group is 2 or 3.

3. The composition containing metal particles according to claim 1 or 2, wherein the compound (B) has a branched and/or cyclic structure.

4. The composition containing metal particles according to any one of claims 1 to 3, wherein, with the quantity of the functional group being taken as n, the compound (B) has an n-valent hydrocarbon group.

5. The composition containing metal particles according to claim 4, wherein a carbon number of the n-valent hydrocarbon group is 30 to 60.

6. The composition containing metal particles according to any one of claims 1 to 5, wherein the compound (B) comprises one or more selected from the group consisting of dimer acid, trimer acid, dimer diol, trimer triol, dimer diamine, and trimer triamine.

7. The composition containing metal particles according to any one of claims 1 to 6, comprising 0.1 parts by mass to 3 parts by mass of the compound (B) with respect to 100 parts by mass of the metal particle (A).

8. The composition containing metal particles according to any one of claims 1 to 7, comprising 0.3 parts by mass to 2.7 parts by mass of the compound (B) with respect to 100 parts by mass of the metal particle (A).

9. The composition containing metal particles according to any one of claims 1 to 8, wherein the compound (B) comprises a compound (Bx) with a carbon number of 20 to 80 having three carboxyl groups.

10. The composition containing metal particles according to claim 9, wherein the compound (Bx) is trimer acid.

11. The composition containing metal particles according to claim 9 or 10, wherein the compound (B) further comprises a compound (By) with a carbon number of 20 to 80 having two carboxyl groups.

12. The composition containing metal particles according to claim 11, wherein the compound (By) is dimer acid.

13. The composition containing metal particles according to any one of claims 9 to 12, comprising 0.05 parts by mass to 2.7 parts by mass of the compound (Bx) with respect to 100 parts by mass of the metal particle (A).

14. The composition containing metal particles according to any one of claims 1 to 13, wherein the average particle size of the metal particle (A) is 150 nm to 450 nm.

15. A bonding paste comprising a dispersion medium (C) and the composition containing metal particles according to any one of claims 1 to 14.

16. The bonding paste according to claim 15, wherein the dispersion medium (C) comprises a dispersion medium having a boiling point of 200°C or higher.

17. The bonding paste according to claim 15, wherein the dispersion medium (C) comprises a dispersion medium having a boiling point of 250°C or higher.

18. The bonding paste according to any one of claims 15 to 17, wherein the dispersion medium (C) comprises one or more selected from the group consisting of glycol ether-based dispersion media and diol-based dispersion media.

19. The bonding paste according to any one of claims 15 to 18, wherein a proportion of a mass of the metal particle (A) in a mass of the bonding paste is 80 mass% to 95 mass%.

20. A bonding body obtained by bonding a first bonded part and a second bonded part with the bonding paste according to any one of claims 15 to 19.
